# EUROPEAN PATENT APPLICATION

(11) **EP 4 650 843 A1**
(43) Date of publication of application: **19.11.2025**
(21) Application number: 25174299.5
(22) Date of filing: 05.05.2025
(51) Int. Cl.: G02B 6/44

(54) **ARMORED OPTICAL FIBER CABLE**

(30) Priority: 14.05.2024 IN 202411037940
(71) Applicant: Sterlite Technologies Limited, Gurugram, Haryana 122102 (IN)
(72) Inventor: Sahoo, Kishore, 122102 Gurugram, Haryana (IN); Murthy, Venkatesh, 122102 Gurugram, Haryana (IN); Tenzing, Kangabam, 122102 Gurugram, Haryana (IN)
(74) Representative: Petraz, Gilberto Luigi

(57) **Abstract**

The present disclosure provides an optical fiber cable (102) including a plurality of optical transmission elements (104), and a metallic layer (108) surrounding the plurality of optical transmission elements (104). Further, the optical fiber cable (102) includes a sheath (114) surrounding the metallic layer (108), wherein the sheath (114) is at least in partial contact with the metallic layer (108). An inner surface of the sheath (114) has a first set of ribs (110) that are deformed at substantial regular intervals along the length of the sheath (114). The arrangement of the optical fiber cable (102) allows an easy separation/peel off of the sheath (114) from the metallic layer (108) in a cost-effective manner as it does not require any additional material or tool. The structure of the optical fiber cable (102) reduces bonding between the sheath and the metallic layer.

## Description

### TECHNICAL FIELD

Embodiments of the present disclosure relate to the field of wireless communication networks, and in particular, relates to an armored optical fiber cable.

The present application claims the benefit of Indian Application No. 202411037940 titled "ARMORED OPTICAL FIBER CABLE" filed by the applicant on May 14, 2024**,** which is incorporated herein by reference in its entirety.

### BACKGROUND ART

Optical fibers are widely used to transmit information or data in the form of light from one place to another. The optical fibers are disposed within the optical fiber cable. Fiber optic cables include one or more optical fibers or other optical waveguides that conduct optical signals, for example carrying voice, data, video, or other information. In a typical cable arrangement, optical fibers are placed in a tubular assembly. A tube may be disposed inside an outer jacket or may form the outer jacket. In either case, the tube typically provides at least some level of protection for the fibers contained therein.

Another conventional technology for protecting optical fibers entails placing a water absorbent chemical, such as water-swellable material, within the cable. The chemical absorbs water that may inadvertently enter the cable, and swells to prevent the water from traveling down long lengths of cable and degrading the delicate optical fibers.

Optical fibers are ordinarily susceptible to damage from water and physical stress. Without an adequate barrier, moisture may migrate into a fiber optic cable and weaken or destroy the cable's optical fibers. Without sufficient physical protection, stress or shock associated with handling the fiber optic cable may transfer to the optical fibers, causing breakage or stress-induced signal attenuation. One conventional technique for protecting the optical fibers from damage is to fill the cable with a fluid, a gel, a grease, or a thixotropic material that strives to block moisture incursion and to absorb mechanical shock.

An optical fiber cable has secured an important position in building the optical network of modern communication systems across the globe. The optical fiber cable is part of millions of miles of an optical network. From mountain regions to shoreline, from remotest villages to urban environments, engineers have installed the optical fiber cable almost in every region for better internet connectivity and high bandwidth. In general, the optical fiber cable may incorporate a metallic layer under a sheath (or outer jacket), wherein a separation layer may be formed between the metallic layer and the sheath for ease of separation and fiber access.

Conventionally, the separation layer in the form of oil or tape or coating may be placed over or within the metallic layer for easy separation between the sheath and the metallic layer during end preparation for termination of the optical fiber cable or mid-spanning of the optical fiber cable. However, this incurs extra process step in the manufacturing of optical fiber cable, extra cost of manufactured product and/or extra efforts for removing the separation layer.

Other conventional technologies for controlling adhesion between the jacket and the armor are generally limited. One approach involves coating the armor with a polymer that adheres to the jacket but has a low cohesive strength to facilitate peeling the jacket from the armor. Another approach involves applying a hot-melt substance, such as atactic polyolefin polymer, between the jacket and the armor. Such conventional approaches can pose challenges in terms of supply availability, manufacturing complications, and consistent performance.

US Patent Application "US8639075B1" describes a communication cable including optical fibers protected by an armor. An outer jacket covers the armor to provide environmental protection. A net located between the outer jacket and the armor can comprise openings, with the outer jacket extending into the openings, towards the armor. The net can be wrapped, formed, or woven around the armor, for example. The net can aid a craftsperson in separating the outer jacket from the corrugated metal layer, for example in connection with servicing the cable. The openings can control coupling between the outer jacket and the armor, for example providing a desired level of friction, bonding, adhesion, adherence, fusion, and/or contact between the outer jacket and the armor.

Another US Patent Application "US11619796B2" describes a ribbed and grooved fiber cable including a core with a plurality of optical fibers, a sheath enveloping the core and one or more strength members embedded in the sheath. The strength members are coated with a water blocking coating material having at least one of an ultraviolet (UV) curable water swellable resin composition and a layer of ethylene acrylic acid (EAA). The sheath of the cable has at least one of a plurality of ribs and grooves on an external surface of the sheath, and a plurality of ribs and grooves on an internal surface of the sheath. The plurality of ribs have variable height.

Yet another US Patent Application "US7123801B2" describes optical fiber cables with a central strength member encircled by a jacket having slots which are disposed within the jacket around the strength member and which receive one or more optical fibers. The optical fibers are free to move in the ducts, and preferably, the optical fibers are tight buffered. Portions of the jacket intermediate the ducts connect to the strength member which resists longitudinal movement of the jacket relative to the core.

While the prior arts cover various solutions to prevent sticking of the sheath and other elements of the cable to provide smooth end preparation for termination; however, there still remains a scope for improvement.

Accordingly, to overcome the disadvantages of the prior arts, there is a need for a technical solution that overcomes the above-stated limitations in the prior arts. The present disclosure provides an armored optical fiber cable for communications and other applications.

### SUMMARY OF THE DISCLOSURE

Embodiments of the present disclosure relates to an optical fiber cable including a plurality of optical transmission elements and a metallic layer surrounding the plurality of optical transmission elements. In particular, the plurality of optical transmission elements is one of: loose fibers, ribbons, Intermittently Bonded Ribbons (IBRs), loose tubes, micromodules, and tight buffer fibers. And, the metallic layer is one of: a corrugated Electro Chrome Coated Steel (ECCS) tape and an Aluminum tape.

According to the first aspect of the present disclosure, the metallic layer is devoid of adhesion controlling film or adhesion controlling material. The metallic layer is wrapped with an overlap of less than 30 percent of a width of the metallic layer. The metallic layer has corrugations in the form of alternate ribs and grooves. The metallic layer is wrapped around the plurality of optical transmission elements such that a second set of ribs and a second set of grooves of the metallic layer are positioned substantially orthogonal to a longitudinal axis of the optical fiber cable.According to the second aspect of the present disclosure, , the optical fiber cable includes a sheath surrounding the metallic layer. In particular, the sheath is at least in partial contact with the metallic layer. An inner surface of the sheath has a first set of ribs that are deformed at substantial regular intervals along the length of the sheath.

According to the third aspect of the present disclosure, an interval of deformation within the first set of ribs ranges from 2 milli-meter (mm) to 3 mm corresponding to a length of the optical fiber cable. The deformation has a depth in a range of 0.1 mm to 2 mm in the first set of ribs on an inner surface of the sheath.

The optical fiber cable is devoid of: additionally, applied component or additionally applied material in-between the metallic layer and the sheath.

According to the fourth aspect of the present disclosure, the method for manufacturing an optical fiber cable includes paying off a plurality of optical transmission elements and wrapping a metallic layer around the plurality of optical transmission elements, extruding a sheath surrounding the metallic layer. Particularly, the sheath is at least in partial contact with the metallic layer. Moreover, the sheath is extruded with a first set of ribs and a first set of grooves on an inner surface of the sheath. Further, the first set of ribs on the inner surface of the sheath gets deformed at substantial regular intervals along a length of the sheath when a first set of ribs comes in contact with the metallic layer. The wrapping of the metallic layer and the extrusion of the sheath is performed in a tandem manner.

According to the fifth aspect of the present disclosure the armored optical fiber cable includes a sheath with a plurality of ribs and a plurality of grooves on an inner surface of the sheath to allow an easy separation/peel off of the sheath from a metallic layer (e.g., steel tape) in the optical fiber cable, in a cost-effective manner, without requiring any addition material or tool.

According to the fourth aspect of the present disclosure, arrangement of the armored optical fiber cable reduces material consumption due to grooving in the inner surface of the sheath and avoiding use of any separation layer. The arrangement/structure of the optical fiber cable reduces bonding between the sheath and the metallic layer.

The foregoing objectives of the present disclosure are attained by providing an armored optical fiber cable.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
FIG. 1 is a pictorial snapshot illustrating a cross-sectional view of an optical fiber cable in accordance with an embodiment of the present disclosure.
FIG. 2 is a pictorial snapshot illustrating a side view of the optical fiber cable in accordance with an embodiment of the present disclosure.
FIG. 3 is a pictorial snapshot illustrating a cross-sectional view of a sheath of the optical fiber cable in accordance with an embodiment of the present disclosure.
FIG. 4 is a pictorial snapshot illustrating a cross-sectional view of the optical fiber cable depicting an overlap portion of a metallic layer in accordance with an embodiment of the present disclosure.
FIG. 5 is a pictorial snapshot illustrating a cross-sectional view of the optical fiber cable without a water blocking tape in accordance with an embodiment of the present disclosure.
FIG. 6 is a pictorial snapshot illustrating a closeup view of an inner surface of the sheath of the stripped optical fiber cable after manufacturing in accordance with an embodiment of the present disclosure.
FIG. 7 is a flow chart illustrating a method for manufacturing the optical fiber cable in accordance with an embodiment of the present disclosure.

### REFERENCE NUMERALS

- 100: Cross-Sectional view of optical fiber cable
- 102: Optical fiber cable
- 104: Optical transmission elements
- 106: Water blocking tape (WBT)
- 108: Metallic layer
- 110: First set of ribs
- 112: First set of grooves
- 114: Sheath
- 200: Side view of optical fiber cable
- 202: Second set of ribs
- 204: Second set of grooves
- 300: Cross-Sectional view of the sheath
- 400: Cross-Sectional view of optical fiber cable
- 402: Overlap portion/region
- 500: Cross-Sectional view of optical fiber cable
- 600: Cross-Sectional view of the inner surface of stripped sheath
- 602: Rectangular block of deformed sheath
- 604: Length
- 606: Width
- 700: Flow chart of method for manufacturing an optical fiber cable

The optical fiber is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

**The following brief definition of terms** shall **apply throughout the present** disclosure:
Term optical fiber refers to a medium associated with transmission of information over long distances in the form of light pulses. The optical fiber uses light to transmit voice and data communications over long distances when encapsulated in the sheath (114). The optical fiber may be of ITU.T G.657A2 category. Alternatively, the optical fiber may be of ITU.T G.657A1 or G.657B3 or G.652D or another suitable category. The ITU.T, stands for International Telecommunication Union-Telecommunication Standardization Sector, is one of the three sectors of the ITU.
Term "optical fiber cable" as used herein refers to a cable that encloses a plurality of optical fibers.
Term "single mode fiber" as used herein refers to a single glass fiber strand that may allow transmission of the light. The single mode fiber may feature only transmission mode.
Term "multi-mode fiber" as used herein refers to an optical fiber that supports propagation of multiple modes.
Term "single core fiber" as used herein refers to an optical fiber that has single core for transmission of data/light.
Term "multi-core fiber" as used herein refers to an optical fiber that has multiple cores for transmission of data/light.
Term "intermittently bonded ribbon (IBR)" as used herein refers to an optical fiber ribbon having a plurality of optical fibers such that the plurality of optical fibers is intermittently bonded to each other by a plurality of bonded portions that are placed along the length of the plurality of optical fibers. The plurality of bonded portions is separated by a plurality of unbonded portions.

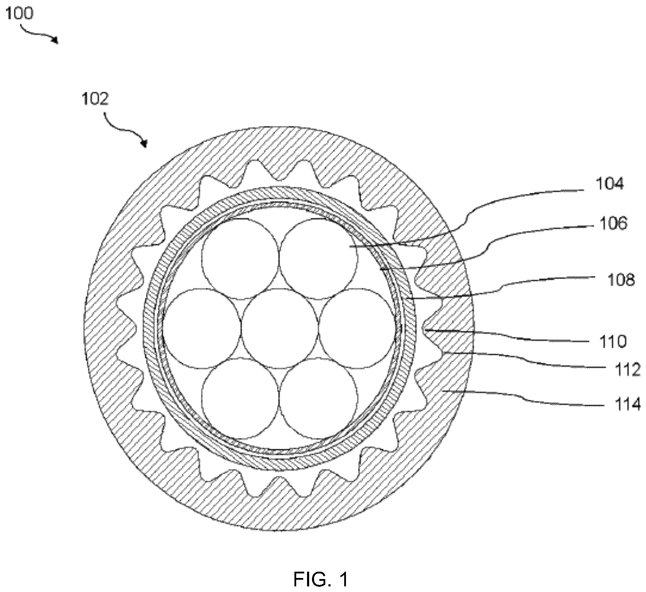

FIG. 1 , FIG. 2, FIG.4 and FIG. 5 are pictorial snapshots illustrating a cross-sectional view (100) , side view (200), a cross-sectional view (400) and cross-sectional view (500) of an optical fiber cable (102) in accordance with one or more embodiments of the present disclosure.

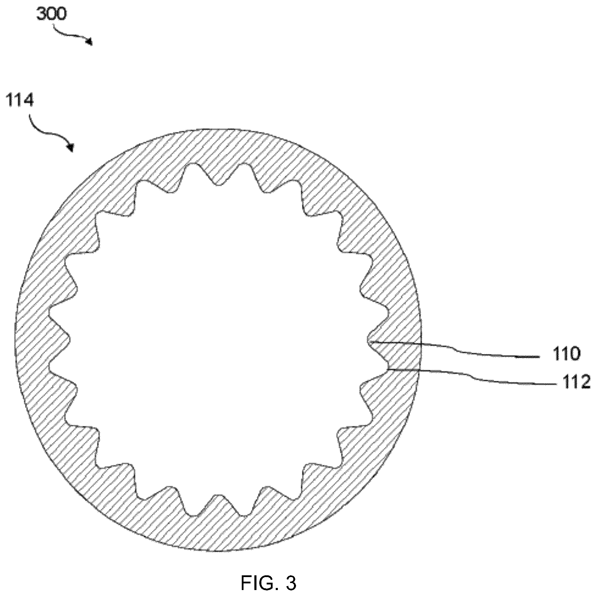

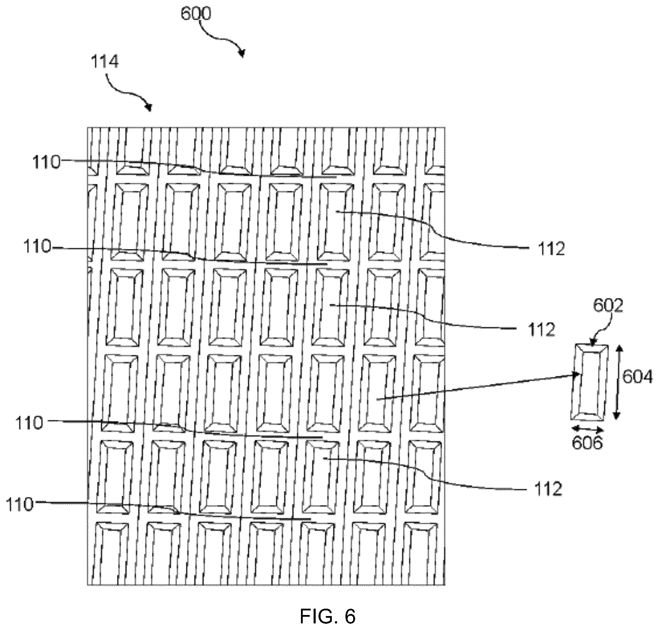

FIG. 3 and FIG. 6 are pictorial snapshots illustrating a sectional view (300) and cross-sectional view (600) of a sheath (114) of the optical fiber cable (102). The cross-sectional view (500) of the optical fiber cable (102) is without a water blocking tape (WBT) (106).

Referring to FIG. 1 to FIG. 6, the optical fiber cable (102) includes one or more optical transmission elements (104), the water blocking tape (106), the metallic layer (108) and the sheath (114).

In accordance with an embodiment of the present disclosure, the one or more optical transmission elements (104) may be present in form of, but not limited to, a plurality of optical fibers, a group of loose optical fibers, a group of optical fiber ribbons, a stack of optical fiber ribbons, a group of bendable ribbons, a group of corrugated ribbons, a group of intermittently bonded optical fiber ribbons, a plurality of buffer tubes, a plurality of tight buffered optical fibers, loose tubes, micromodules, tight-buffered optical fibers.

In accordance with an embodiment of the present disclosure, the colored optical fiber may have a diameter of 250 microns and a bare optical fiber may have a diameter of 242+/-7 microns. The diameter of the optical fiber may vary based on the usage, an application, and a type of service e.g. 180 microns, 200 microns, 220 microns etc.

In accordance with an embodiment of the present disclosure, the optical fiber may have a maximum attenuation less than 0.4 dB at 1310 nm (nano-meter), or 0.3 dB at 1550 nm.

In accordance with an embodiment of the present disclosure, the optical fiber may be a bend insensitive fiber that has less degradation in optical properties during bending of the optical fiber cable. The optical fibers may be coloured fiber.

In accordance with an embodiment of the present disclosure, the optical fiber may be a single mode optical fiber, a multicore optical fiber, a multimode optical fiber or the like. The single mode optical fiber carries only a single mode of light and the multimode optical fiber carries multiple modes of light to propagate. The multicore optical fibers comprise multiple cores as opposed to the single mode optical fiber and the multimode optical fibers that comprise only a single core.

In accordance with an embodiment of the present disclosure, the plurality of buffer tubes is an encasement tube used to encapsulate a number of optical fibers or an optical fiber ribbon stack. In particular, a buffer tube from the plurality of buffer tubes is used in the optical fiber cable to provide mechanical isolation and protection from physical damages. The plurality of buffer tubes includes a plurality of optical transmission elements. Further, an optical fiber ribbon bundle is a group of a plurality of optical fiber ribbons arranged together.

The optical fiber ribbon includes a number of optical fibers arranged together using a matrix material. Multiple individual optical fiber ribbons are stacked or grouped into a bundle to form the optical fiber ribbon bundle. Furthermore, an intermittently bonded optical fiber ribbon from the group of intermittently bonded optical fiber ribbons is formed by intermittently bonding the plurality of optical fibers with a specific material that imparts a bending and rolling capability along a width of the intermittently bonded optical fiber ribbon.

In accordance with an embodiment of the present disclosure, the micromodules typically include the optical fibers arranged in the easy peelable encasings for transmitting optical data and are housed in a cable jacket. The number of the one or more optical transmission elements (104) may be 4 to 48 enclosing a plurality of optical fibers. Alternatively, the number of the one or more optical transmission elements (104) may vary based on the usage, the application and location and type of the service.

In accordance with an embodiment of the present disclosure, the water blocking tape (106), also called as a water swellable tape, extends lengthwise in the optical fiber cable (102) and is wrapped around the one or more optical transmission elements (104). In particular, the water blocking tape (106) runs generally parallel to the one or more optical transmission elements (104) and is wrapped lengthwise over the one or more optical transmission elements (104). As a result of wrapping, one surface of the water blocking tape (106) is adjacent and essentially parallel to an interior surface of the optical fiber cable (102).

In accordance with an embodiment of the present disclosure, the water blocking tape (106) comprises a single/double layers of non-woven polyester with particles of superabsorbent polymer powder (such as sodium polyacrylate powder or a potassium polyacrylate/acrylamide copolymer powder, or the like) adhering loosely to one surface of the non-woven polyester layers. Moreover, the thickness and width of the water blocking tape (106) can be controlled to optimize water blocking in the optical fiber cable (102). Further, the water blocking tape (106) may be non-compressible, without necessarily needing any foam material, foam layers, adhesives, binders, cured agents, or wetted material.

In accordance with an embodiment of the present disclosure, the water blocking tape (106) runs along the optical fiber cable (102), with the powder disposed on the side of the water blocking tape (106) that faces the one or more optical transmission elements (104) or in between two non-woven polyester layers of water blocking tape (106).

In accordance with an embodiment of the present disclosure, the water blocking tape (106) may be replaced by superabsorbent powder coated aramid yarns, glass roving yarns, and other suitable water blocking material.

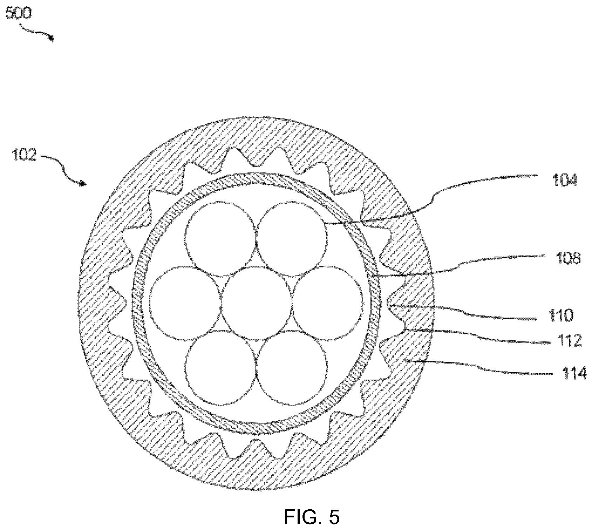

In accordance with an embodiment of the present disclosure, the water blocking tape (106) is surrounded by the metallic layer (108). Alternatively, the optical fiber cable (102) may be devoid of the water blocking tape (106), where the one or more optical transmission elements (104) is directly surrounded by the metallic layer (108) (as shown in FIG. 5).

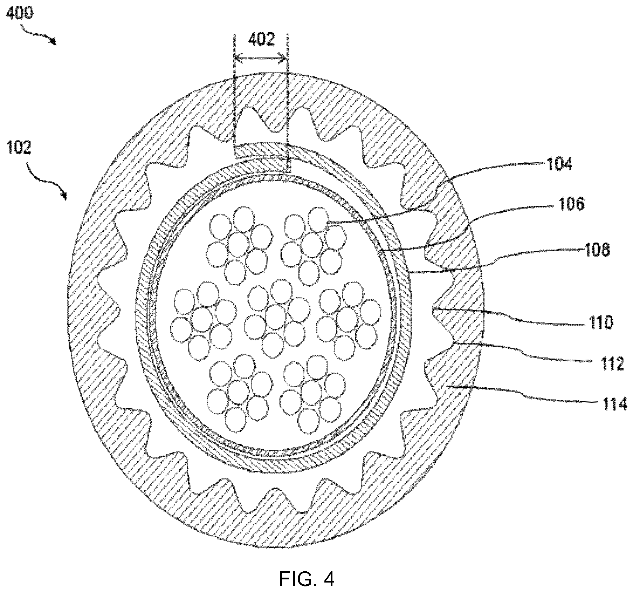

In accordance with an embodiment of the present disclosure, the metallic layer (108) is devoid of adhesion controlling film or adhesion controlling material. In particular, the metallic layer (108) is wrapped with an overlap of less than 30 percent of the width of the metallic layer (108). The same is indicated as an overlap portion/region (402) in FIG. 4. Moreover, the overlap portion (402) is formed by overlapping one end of the metallic layer (108) with another end of the metallic layer (108). Further, the overlap portion (402) avoids a sheath material passing inside a cable core to prevent the damage of the one or more optical transmission elements (104).

In accordance with an embodiment of the present disclosure, the metallic layer (108) offers mechanical protection, such as crush and rodent resistance to the optical fiber cable (102). In particular, the metallic layer (108) may also provide a capability to conduct a signal applied for identification and location when the optical fiber cable (102) is buried or deployed in an underground application. Moreover, the metallic layer (108) may comprise a corrugated metal, flexible interlocking structure or other appropriate system for providing mechanical protection for the optical fiber cable (102).

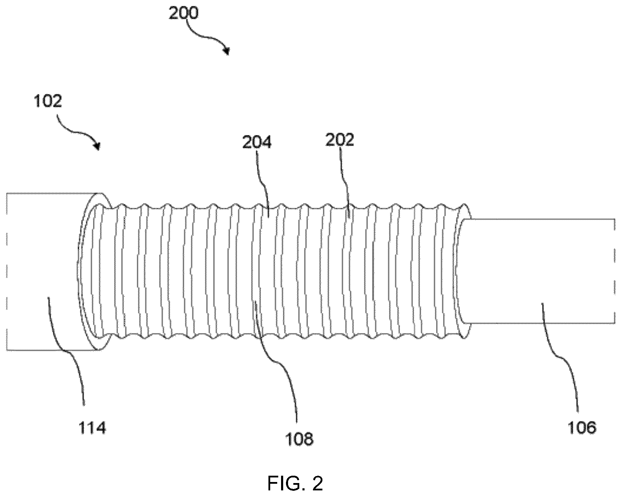

In accordance with an embodiment of the present disclosure, the metallic layer (108) is one of: a corrugated Electro Chrome Coated Steel (ECCS) tape and an Aluminum tape. Further, the metallic layer (108) has corrugations in form of alternate ribs (second set of ribs) (202) and grooves (second set of grooves) (204), which are positioned substantially orthogonal to a longitudinal axis of the optical fiber cable (102), as shown in FIG. 2, and is wrapped around the one or more optical transmission elements (104). Without corrugation in orthogonal to the metallic layer (108), achieving a reduction in contact area with the sheath (114) may not be feasible.

In accordance with an embodiment of the present disclosure, the metallic layer (108) is surrounded by the sheath (114) which is at least in partial contact with the metallic layer (108), wherein the second set of ribs (202) and the second set of grooves (204) of the metallic layer (108) are orthogonal to a first set of ribs (110) and a first set of grooves (112) on the inner surface of the sheath (114). Further, the first set of ribs (110) and the first set of grooves (112) of the sheath (114) are positioned substantially parallel to the longitudinal axis of the optical fiber cable (102).

In accordance with an embodiment of the present disclosure, the sheath (114) may be referred to as a jacket. Usually, sheathing (extrusion) for the sheath (114) is done at a high temperature (more than 100°C). The sheathing is a process of squeezing a sheathing material through a funnel of a die as the core runs through the center.

In accordance with an embodiment of the present disclosure, the sheathing material for the sheath (114) may include, but not limited to, polyvinylchloride, polyethylene (such as High Density Poly Ethylene (HDPE), Medium Density Poly Ethylene, Low Density Poly Ethylene and Ultra-violet (UV) stabilised black polyethylene), polyurethane, thermoplastic rubber/elastomer, thermoplastic chlorinated polyethylene, thermoset polyolefins or combination thereof.

In accordance with an embodiment of the present disclosure, the inner surface of the sheath (114) has the first set of ribs (110) and the first set of grooves (112), which reduces the material consumption, hence reduces manufacturing costs. In particular, the first set of ribs (110) is deformed at substantial regular intervals (as shown in FIG. 6) along the length of the sheath (114). Moreover, deformation is the formation of depressed regions in the first set of ribs (110) on the inner surface of the sheath (114) due to contact of the second set of ribs (202) of the metallic layer (108) with a semi-solid sheath material during the extrusion process. Further, the interval of deformation within the first set of ribs (112) ranges from 2 milli-meter (mm) to 3 mm along a length of the optical fiber cable (102).

In accordance with an embodiment of the present disclosure, the deformation has a depth in a range of 0.1 mm to 2 mm on the inner surface of the sheath (114). These ranges are optimized to reduce the contact surface area between the sheath (114) and the metallic layer (108) and optimized to provide ease of manufacturing of the optical fiber cable (102).

If the depth range is below 0.1 mm, then there may be a large gap between the sheath (114) and the metallic layer (108), which could lead to failure in a water penetration test. If the depth range is above 2 mm, then the second set of grooves (204) of the metallic layer (108) may come substantially in contact with the sheath (114), thereby increasing the contact surface area, hence increasing the adhesion between the sheath (114) and the metallic layer (108).

In accordance with an embodiment of the present disclosure, the shape of the first set of ribs (110), the second set of ribs (202), the first set of grooves (112) and the second set of grooves (204) can be, for example, but not limited to, concave, convex, V-shape, square, rectangle, or the like.

In accordance with an embodiment of the present disclosure, extrusion of the sheath (114) over the metallic layer (108) employs a distinctive tooling design, which in turn creates a substantial rectangular mesh pattern (as illustrated in FIG. 6) on the inner surface of the sheath (114) post extrusion. In particular, each rectangular block (602) of the rectangular mesh pattern has a length (604) between 2 mm and 3 mm and a width (606) between 0.2 mm and 1.5 mm. Moreover, the formation of a rectangular mesh pattern allows an optimum contact surface area between the sheath (114) and the metallic layer

(108). Thus, results in allowing easy separation/ peeling of the sheath (114) at end preparation for termination and mid- spanning. Alternatively, the deformed set of ribs (110) may form a different type/shape of pattern on the inner surface of the sheath (114) depending upon the shape and dimensions of the first set of ribs (110) and second set of ribs (202).

In accordance with an embodiment of the present disclosure, the formation of the deformed ribs (112) on the inner surface of the sheath (114) results in reduced adhesion between the sheath (114) and the metallic layer (108), without including an additional adhesion resistant layer/element in between the sheath (114) and the metallic layer (108).

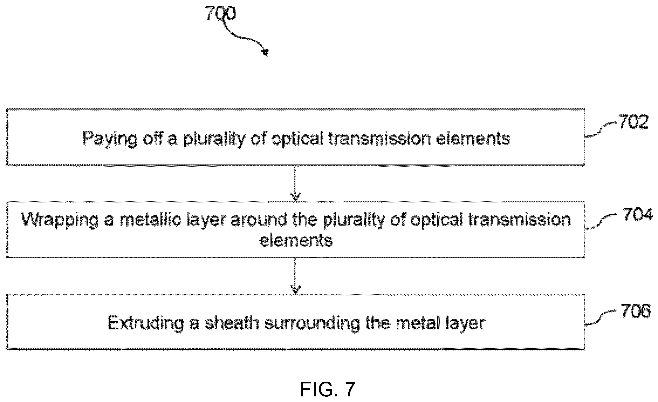

FIG. 7 illustrates a flow chart (700) of a method for manufacturing the optical fiber cable (102).

At 702, a plurality of optical transmission elements (104) are paid off.

At 704, the metallic layer (108) is wrapped around the plurality of optical transmission elements (104).

At 706, the sheath (114) surrounding the metallic layer (108) is extruded. The wrapping of the metallic layer (108) and the extrusion of the sheath (114) is performed in a tandem manner.

Advantageously, the sheath (114) and the metallic layer (108) are directly in contact with each other, having no additional layer in between and still able to achieve reduced adhesion force between them. Further, the optical fiber cable (102) is devoid of: additionally applied component or additionally applied material or additional adhesion resistant layer in-between the metallic layer (108) and the sheath (114), which reduces the manufacturing costs and process complexity. Furthermore, this cable arrangement results in optimizing the gap and the contact surface area between sheath (114) and the metallic layer (108), such that the adhesion is reduced and the optical fiber cable (102) passes the water penetration test with 1 meter water-head for 24 hours.

Unlike existing optical fiber cables, the present disclosure provides an armored optical fiber cable, where construction and arrangement of the armored optical fiber cable allows an easy separation/peel off of a sheath from a metallic layer (e.g., steel tape) in a cost-effective manner as it does not require any addition material or tool for separation. The arrangement of the optical fiber cable reduces the material consumption due to grooving in an inner surface of the sheath and avoiding use of any separation layer in between sheath and metallic layer. The arrangement/structure of the optical fiber cable reduces bonding between the sheath and the metallic layer.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber cable (102), **characterized in that**:
a plurality of optical transmission elements (104);
a metallic layer (108) surrounding the plurality of optical transmission elements (104); and
a sheath (114) surrounding the metallic layer (108), wherein the sheath (114) is at least in partial contact with the metallic layer (108),
wherein an inner surface of the sheath (114) has a first set of ribs (112) that are deformed at substantial regular intervals along the length of the sheath (114).

2. The optical fiber cable (102) as claimed in claim 1, wherein the plurality of optical transmission elements (104) is one of: loose fibers, ribbons, Intermittently Bonded Ribbons (IBRs), loose tubes, micromodules, and tight buffer fibers.

3. The optical fiber cable (102) as claimed in claim 1, wherein the metallic layer (108) is one of: a corrugated Electro Chrome Coated Steel (ECCS) tape and an Aluminum tape, wherein the metallic layer (108) is devoid of adhesion controlling film or adhesion controlling material.

4. The optical fiber cable (102) as claimed in claim 1, wherein the metallic layer (108) has corrugations in form of alternate ribs (202) and grooves (204).

5. The optical fiber cable (102) as claimed in claim 1, wherein the metallic layer (108) is wrapped around the plurality of optical transmission elements (104) such that a second set of ribs (202) and a second set of grooves (204) of the metallic layer (108) are positioned substantially orthogonal to a longitudinal axis of the optical fiber cable (102).

6. The optical fiber cable (102) as claimed in claim 1, wherein the optical fiber cable (102) is devoid of: additionally applied component or additionally applied material in-between the metallic layer (108) and the sheath (114).

7. The optical fiber cable (102) as claimed in claim 1, wherein an interval of deformation within the first set of ribs (112) ranges from 2 milli-meter (mm) to 3 mm corresponding to a length of the optical fiber cable (102).

8. The optical fiber cable (102) as claimed in claim 7, wherein the deformation has a depth in a range of 0.1 mm to 2 mm in the first set of ribs (112) on an inner surface of the sheath (114).

9. The optical fiber cable (102) as claimed in claim 1, wherein the metallic layer (108) is wrapped with an overlap of less than 30 percent of a width of the metallic layer (108).

10. A method for manufacturing an optical fiber cable (102), **characterized in that** steps of:
paying off a plurality of optical transmission elements (104);
wrapping a metallic layer (108) around the plurality of optical transmission elements (104); and
extruding a sheath (114) surrounding the metallic layer (108), wherein the sheath (114) is at least in partial contact with the metallic layer (108);
wherein the sheath (114) is extruded with a first set of ribs (112) and a first set of grooves (110) on an inner surface of the sheath (114), and
wherein the first set of ribs (112) on the inner surface of the sheath (114) gets deformed at substantial regular intervals along a length of the sheath (114) when the first set of ribs (112) comes in contact with the metallic layer (108).

11. The method as claimed in claim 10, wherein the wrapping of the metallic layer (108) and the extrusion of the sheath (114) is performed in a tandem manner.

12. The method as claimed in claim 10, wherein an interval of deformation within the first set of ribs (112) ranges from 2 milli-meter (mm) to 3 mm corresponding to a length of the optical fiber cable (102).

13. The method as claimed in claim 12, wherein the deformation has a depth in a range of 0.1 mm to 2 mm in the first set of ribs (112) on an inner surface of the sheath (114).

14. The method as claimed in claim 10, wherein the metallic layer (108) is wrapped with an overlap of less than 30 percent of a width of the metallic layer (108).

15. The method as claimed in claim 12, wherein the plurality of optical transmission elements (104) is one of: loose fibers, ribbons, Intermittently Bonded Ribbons (IBRs), loose tubes, micromodules, and tight buffer fibers.
